# FASCICULE DE BREVET EUROPEEN

(11) **EP 0 778 299 B1**
(45) Date de publication et mention de la délivrance du brevet: **01.09.1999**
(21) Numéro de dépôt: 96402568.8
(22) Date de dépôt: 28.11.1996
(51) Int. Cl.: C08G 12/38, D21H 17/49

(54) **Procédé de préparation de résines thermodurcissables urée-formol dopées à la mélamine et utilisation de ces résines en tant que résines d'imprégnation**
Verfahren zur Herstellung wärmehärtbarer, mit Melamin modifizierter Harnstoff-Formaldehydharze und ihre Verwendung als Tränkharze
Process for the preparation of thermosetting melamine-modified urea formaldehyde resins and their use as impregnating resins

(30) Priorité: 04.12.1995 FR 9514309
(43) Date de publication de la demande: 11.06.1997
(73) Titulaire: ELF ATOCHEM S.A., 92800 Puteaux, Hauts-de-Seine (FR)
(72) Inventeur: Lalo, Jack, 31400 Toulouse (FR); Loussayre, Frédéric, 31240 L'Union (FR); Garrigue, Roger, 31000 Toulouse (FR)
(74) Mandataire: Rieux, Michel

(56) Documents cités:
- EP-A- 0 062 389
- EP-A- 0 322 297
- DD-A- 246 442
- DE-A- 4 018 766
- DE-B- 1 908 094
- CHEMICAL ABSTRACTS, vol. 110, no. 10, 6 Mars 1989 Columbus, Ohio, US; abstract no. 76699, XP002011388 & RO 94 200 B (COMBINATUL CHIMIC) 30 Mai 1988

## Description

La présente invention porte sur un procédé de préparation de résines thermodurcissables urée-formol dopées à la mélamine, ainsi que sur l'utilisation de ces résines en tant que résines d'imprégnation.

Les résines ci-dessus se présentent sous la forme de solutions aqueuses d'urée et de formol assez faiblement condensées. Ces solutions servent à l'imprégnation de matériaux supports absorbants, tels que le papier qui entre dans la fabrication de stratifiés.

Pour la mise en oeuvre de ces résines d'imprégnation, on prépare des mélanges d'imprégnation comprenant un condensat (ou précondensat) de résine, un agent de durcissement latent, tel qu'un sel d'amine, et, le cas échéant, des adjuvants usuels tels qu'agents démoulants, agents mouillants, solvants, plastifiants et opacifiants. Les agents de durcissement utilisés sont tels qu'après avoir été ajoutés aux résines, ils laissent des temps de mise en oeuvre suffisants à la température ambiante, et, en même temps, permettent d'atteindre des durcissements extrêmement courts aux températures de mise en oeuvre, c'est-à-dire à des températures de l'ordre de 100 à 200°C.

Les résines d'imprégnation doivent, en elles-mêmes, présenter une bonne stabilité, une bonne réactivité, une bonne imprégnabilité, une compatibilité avec les adjuvants classiques mentionnés ci-dessus et une compatibilité avec les résines mélamine - formol.

La baisse du rapport F/NH₂ des résines urée-formol s'accompagne soit d'un manque de stabilité dans le temps, soit d'un manque de réactivité.

Le besoin se fait donc sentir de mettre au point des résines d'imprégnation présentant des taux de formol réduits, une bonne stabilité doublée d'une bonne réactivité, ainsi qu'une bonne imprégnabilité du papier et similaires.

Le procédé de fabrication d'une résine urée - formol dopée à la mélamine, qui fait l'objet de la présente invention, permet d'atteindre ces résultats. Il est caractérisé par le fait qu'on ajoute de la mélamine à un mélange urée - formol de rapport F/NH₂ supérieur à 1,5, en milieu aqueux, à un pH compris entre 6 et 8 et à une température comprise entre 20 et 90°C, la quantité de mélamine étant telle que son taux dans la résine finale soit compris entre 1 et 5% en poids, puis on maintient le milieu réactionnel à une température de 80 à 103°C, à un pH de 6,5 à 7,8 pendant 5 à 15 minutes puis à un pH de 4,5 à 5,5 jusqu'à ce que l'on obtienne une résine ayant un degré de condensation recherché.

On suit l'évolution de la condensation en mesurant la tolérance à l'eau : on ajoute x volumes d'eau à 1 volume de résine et on détermine la température pour laquelle le mélange passe de limpide à trouble ; la valeur de x choisie, qui conditionne la qualité du produit fini dépend des paramètres ci-dessus et notamment de la composition de la résine finale.

En général, le temps de condensation au pH de 4,5 à 5,5 est de 60 à 120 minutes.

Pour la mise en oeuvre du procédé selon l'invention, on peut utiliser un mélange de départ urée/formol au moins partiellement sous la forme d'un précondensat urée/formol. On peut obtenir ledit précondensat en préparant un mélange urée-formol de rapport F/NH₂ compris entre 2 et 6, en milieu aqueux, en ajustant le pH à une valeur comprise entre 7 et 8,3, puis en chauffant au reflux (environ 103°C) pendant une durée pouvant aller jusqu'à 15 minutes en maintenant le pH au-dessus de 5,9 et/ou pendant une durée pouvant aller jusqu'à 30 minutes à un pH compris entre 4 et 6,5. On peut ajouter de l'urée au précondensat en même temps que la mélamine, afin d'obtenir le rapport F/NH₂ voulu, supérieur à 1,5.

Dans le procédé selon l'invention, le formol est généralement utilisé sous la forme d'une solution aqueuse de concentration comprise entre 30 et 75% en poids.

Par ailleurs, on peut introduire dans le milieu réactionnel un sulfite alcalin, comme le métabisulfite de sodium, dans une quantité telle que son taux dans la résine finale ne dépasse pas 2% en poids.

On peut également introduire du méthanol dans le milieu réactionnel dans une quantité telle que son taux dans la résine finale ne dépasse pas 5% en poids.

De façon connue, après la condensation en présence de mélamine, on peut ajuster le pH à une valeur de 7,2 à 7,5 en refroidissant le milieu réactionnel jusqu'à une température de 40 à 60°C, ajouter de l'urée, et, le cas échéant de l'eau, pendant un laps de temps pouvant aller jusqu'à 30 minutes, le rapport F/NH₂ étant alors de 0,45 à 0,85, et, après refroidissement, ajuster le pH à une valeur de 8,4-8,7.

La condensation en présence de mélamine selon l'invention et la préparation du précondensat si elle a lieu sont généralement conduites à une concentration en matières actives comprise entre 35 et 70% en poids ; quant à l'étape postérieure décrite dans le précédent paragraphe, elle est généralement conduite à une concentration en matières actives comprise entre 50 et 80% en poids.

La présente invention porte également sur l'utilisation de la résine ainsi obtenue comme résine aminoplaste thermodurcissable d'imprégnation.

Les Exemples suivants illustrent encore l'invention. Dans les Exemples, les pourcentages sont en poids sauf indication contraire.

### Exemple 1

Dans un réacteur, on introduit 3611 g d'une solution aqueuse de formol à 44,5%, 62 g d'eau et 459 g d'urée solide, et on chauffe légèrement jusqu'à ce que l'urée soit mise en solution. On ajuste alors la valeur du pH à 7 et on chauffe le milieu réactionnel au reflux. On maintient le pH à une valeur au-dessus de 6 par addition d'une solution aqueuse de soude à 20 %. Après 15 minutes de reflux, on ajuste la valeur du pH à 4,2 par addition d'une solution aqueuse d'acide formique à 10% ; et on poursuit le reflux à ce pH pendant 30 minutes.

Après avoir ajusté la valeur du pH à 6,8 par addition de soude, et la température du milieu réactionnel, à 80°C, on ajoute 363 g d'eau, 55 g d'urée solide et 180 g de mélamine. On amène la température du milieu réactionnel à 98°C, et on maintient le pH à une valeur comprise entre 6,9 et 7,1. Après 10 minutes à 98°C, on ajuste le pH du milieu réactionnel à 4,6.

La réaction de condensation est alors suivie par la mesure de la tolérance à l'eau. Celle-ci évolue lentement au cours de la réaction, comme il est décrit dans le Tableau 1 ci-dessous.

**Tableau 1**

| | | | | | | |
|---|---|---|---|---|---|---|
| Temps de condensation (min) | 15 | 60 | 75 | 90 | 105 | 135 |
| Tolérance à l'eau 4/1 (volume/volume) (°C) | <1 | <1 | 2 | 4 | 9 | 12 |

Le temps de condensation se situe aux environs de deux heures, le test d'arrêt retenu est la tolérance à l'eau 4/1 (volume/volume) à 12°C.

Lorsque le test d'arrêt est atteint, la valeur du pH est ajustée à 7,2, et le milieu réactionnel est refroidi à la température de 40°C. A cette température, on introduit 1270 g d'urée. La valeur du pH est alors ajustée à 8,7. Le rapport molaire final F/NH₂ est de 0,84. Le taux de mélamine dans la résine finale est de 3 %.

Les concentrations en matières actives et les rapports molaires F/NH₂ pour les différentes phases de la résine sont indiqués dans le Tableau 4, ainsi que les caractéristiques de la résine finale.

### Exemple 2

Dans un réacteur, on introduit 5286,2 g d'une solution aqueuse de formol à 44,2%, 54,4 g d'eau, 50 g de métabisulfite de sodium et 667,6 g d'urée solide, et on chauffe légèrement jusqu'à ce que l'urée soit mise en solution. On ajuste la valeur du pH à 8,3 et on chauffe le milieu réactionnel au reflux. On maintient le pH à une valeur au-dessus de 6 par addition d'une solution aqueuse de soude à 20%. Après 15 minutes de reflux, on ajuste la valeur du pH à 4,2 par addition d'une solution aqueuse à 10% d'acide formique ; et on poursuit ce reflux pendant 30 minutes.

Après avoir ajusté la valeur du pH à 7,5 par addition de soude, et la température du milieu réactionnel, à 80°C, on ajoute 52,7 g d'urée solide et 300 g de mélamine. On amène la température du milieu réactionnel à 90-95°C, et on maintient le pH pendant 15 minutes à une valeur comprise entre 7,2 et 7,8. Après 10 minutes à 98°C, on ajuste le pH du milieu réactionnel à 4,6.

La réaction de condensation est suivie par la mesure de la tolérance à l'eau à 4/1 (volume/volume), comme il est décrit dans le Tableau 2.

**Tableau 2**

| | | | | | | |
|---|---|---|---|---|---|---|
| Temps de condensation (min) | 0 | 45 | 60 | 75 | 85 | 95 |
| Tolérance à l'eau 4/1 (volume/volume) (°C) | <0 | 2 | 10 | 14,5 | 16 | 20 |

La valeur du test d'arrêt est la tolérance à l'eau 4/1 (volume/volume) à 20°C.

Lorsque le test d'arrêt est atteint, la valeur du pH est ajustée à 7,5 et on refroidit le milieu réactionnel à 40°C. A cette température, on introduit 2660 g d'urée et 980 g d'eau. La valeur du pH est alors ajustée à 8,7. Le taux de mélamine dans la résine finale est de 3 %. Les concentrations en matières actives et les rapports molaires F/NH₂ pour les différentes phases de la résine sont indiqués dans le Tableau 4, ainsi que les caractéristiques de la résine finale.

### Exemple 3

Dans un réacteur, on introduit 2153 g d'une solution aqueuse de formol à 37%, 20 g de métabisulfite de sodium (Na₂S₂O₅) et 228 g d'urée solide, et on chauffe légèrement jusqu'à ce que l'urée soit mise en solution. On ajuste alors la valeur du pH à 7 et on chauffe le milieu réactionnel au reflux. On maintient le pH à une valeur au-dessus de 6 par addition d'une solution aqueuse de soude à 20%. Après 15 minutes de reflux, on ajuste la valeur du pH à 4,2 par addition d'une solution aqueuse d'acide formique à 10% ; et on poursuit le reflux à ce pH pendant 30 minutes.

Après avoir ajusté la valeur du pH à 6,8 par addition de soude, et la température du milieu réactionnel à 80°C, on ajoute 5 g d'urée solide et 120 g de mélamine. On amène la température du milieu réactionnel à 98°C, et on maintient le pH à une valeur comprise entre 6,9 et 7,1. Après 10 minutes à 98°C, on ajuste le pH du milieu réactionnel à 4,6.

La réaction de condensation est suivie par la mesure de la tolérance à l'eau. Le test d'arrêt est la tolérance à l'eau 1/1 (volume/volume) à 26°C.

Lorsque le test d'arrêt est atteint, la valeur du pH est ajustée à 7,2, et le milieu réactionnel est refroidi à la température de 40°C. A cette température, on introduit 218 g d'eau et 1275 g d'urée. La valeur du pH est alors ajustée à 8,7. Le rapport molaire final F/NH₂ est de 0,5. Le taux de mélamine dans la résine finale est de 3%.

Les concentrations en matières actives et les rapports molaires F/NH₂ pour les différentes phases de la résine sont indiqués dans le Tableau 4, ainsi que les caractéristiques de la résine finale.

### Exemples 4 à 11

On a conduit d'autres condensations selon l'invention ; les conditions, concentrations en matières actives et caractéristiques de la résine finale sont également rapportées dans le Tableau 4.

### Exemple 12

Dans un réacteur, on introduit 2519,8 g d'une solution aqueuse de formol à 37%, 120 g de méthanol et 266,4 g d'urée solide, et on chauffe légèrement jusqu'à ce que l'urée soit mise en solution. On ajuste alors la valeur du pH à 7 et on chauffe le milieu réactionnel à 97°C. On maintient la valeur du pH au-dessus de 6 par addition d'une solution aqueuse de soude à 20%. Après 15 minutes à cette température, on ajuste la valeur du pH à 4,2 par addition d'une solution aqueuse d'acide formique à 10%. Le milieu réactionnel est maintenu à cette valeur de pH et à la température de 100°C pendant 30 minutes.

Après avoir ajusté la valeur du pH à 6,8 par addition de soude, et la température du milieu réactionnel à 80°C, on ajoute 20,8 g d'urée et 120 g de mélamine. On amène la température du milieu réactionnel à 98°C et on maintient le pH à une valeur comprise entre 6,5 et 7. Après 10 minutes à 98°C, on ajuste le pH du milieu réactionnel à 4,6.

La réaction de condensation est alors suivie par la mesure de la tolérance à l'eau. Celle-ci évolue lentement au cours de la réaction, comme il est décrit dans le Tableau 3 :

**Tableau 3**

| | | | |
|---|---|---|---|
| Temps de condensation (min) | 80 | 96 | 105 |
| Tolérance à l'eau 4/1 (volume/volume) (°C) | 11,5 | 20 | 24 |

Le temps de condensation se situe aux environs de deux heures, le test d'arrêt retenu est la tolérance à l'eau 4/1 (volume/volume) à 24°C.

Lorsque le test d'arrêt est atteint, la valeur du pH est ajustée à 7,2, et le milieu réactionnel est refroidi à la température de 40°C. A cette température, on introduit 1061,5 g d'urée. La valeur du pH est alors ajustée à 8,7. Le rapport molaire final F/NH₂ est de 0,65. Le taux de mélamine dans la résine finale est de 3 %.

Les concentrations en matières actives et les rapports molaires F/NH₂ pour les différentes phases de la résine sont indiqués dans le Tableau 4, ainsi que les caractéristiques de la résine finale.

### Exemple 13

Le mode opératoire est en tous points identique à celui de l'Exemple 12 sauf les quantités de produits qui changent ainsi que la valeur du test d'arrêt finale.

| | | |
|---|---|---|
| 1ère phase | Formol 37% | 2270 g |
| | Urée solide | 240 g |
| | Méthanol | 120 g |
| | | |
| 2ème phase | Urée solide | 10 g |
| | Mélamine | 120 g |
| | | |
| | Test d'arrêt Tolérance à l'Eau 4/1 (volume/volume) à 32°C | |
| | | |
| 3ème phase | Urée solide | 1191 g |

Les concentrations en matières actives et les rapports molaires F/NH₂ pour les différentes phases de la résine sont indiqués dans le Tableau 4 ainsi que les caractéristiques de la résine finale.

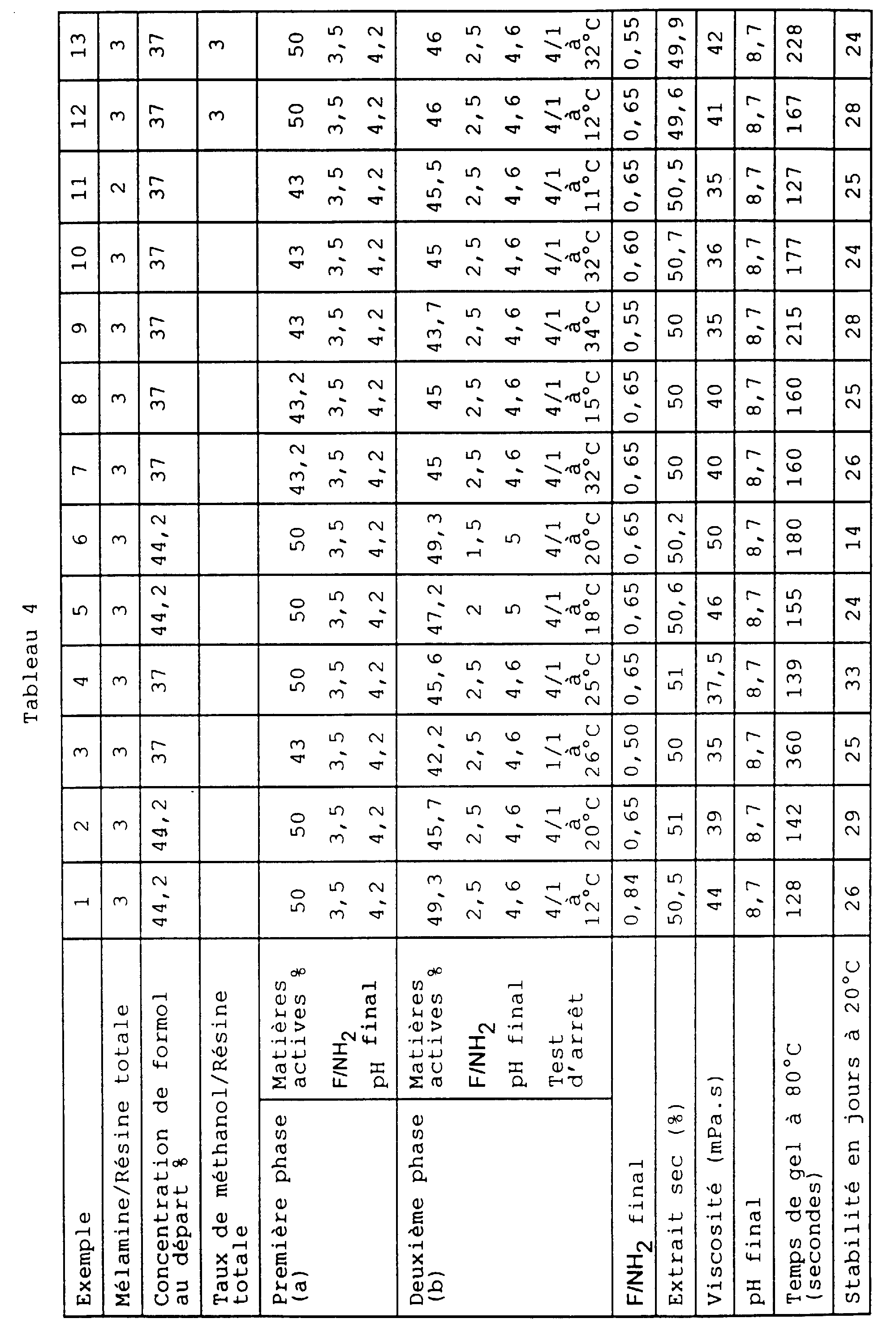

### Exemple 14

Dans un réacteur, on introduit 1263 g d'une solution aqueuse de formol à 37%, 10 g de métabisulfite de sodium, et 144 g d'urée. On ajuste la valeur du pH à 7,3 par addition d'une solution aqueuse de soude à 10%, puis on ajoute 60 g de mélamine. On chauffe le milieu réactionnel à 98°C et on maintient le pH à une valeur comprise entre 6,5 et 7. Après 10 minutes à 98°C, on ajuste le pH du milieu réactionnel à 4,6.

La variation de la condensation est alors suivie par la mesure de la tolérance à l'eau. Celle-ci évolue au cours du temps, comme il est décrit dans le Tableau 5 suivant :

**Tableau 5**

| | | | |
|---|---|---|---|
| Temps de condensation (min) | 40 | 55 | 65 |
| Tolérance à l'eau 4/1 (volume/volume) (°C) | 8 | 13 | 18 |

Lorsque le test d'arrêt est atteint, tolérance à l'eau 4/1 à 18°C, la valeur du pH est ajustée à 7,2, et le milieu réactionnel est refroidi à la température de 40°C. A cette température, on introduit 532 g d'urée. Lorsque la température du milieu réactionnel est à 20°C, la valeur du pH est ajustée à 8,7. Le rapport molaire final est de 0,65. Le taux de mélamine dans la résine finale est de 3%.

Les analyses du produit final sont les suivantes :

| | |
|---|---|
| F/NH₂ final | 0,65 |
| Extrait sec (%) | 50,9 |
| Viscosité (mPa.s) | 39 |
| pH final | 8,7 |
| Temps de gel à 80°C (secondes) | 132 |
| Stabilité en jours à 20°C | 28 |

### Exemple 15

Le mode opératoire suivi est en tous points identiques à celui de l'Exemple 14, sauf que l'urée finale est introduite dans le milieu réactionnel dont la température est maintenue à 60°C. La durée de l'introduction de l'urée est de 30 minutes. Le milieu réactionnel est ensuite refroidi à 20°C. La valeur du pH est alors ajustée à 8,7. Le taux de mélamine dans la résine finale est de 3% et le rapport F/NH₂ est de 0,65.

Les analyses du produit final sont les suivantes :

| | |
|---|---|
| Extrait sec (%) | 51,3 |
| Viscosité (mPa.s) | 42 |
| pH final | 8,7 |
| Temps de gel à 80°C (sec) | 156 |
| Stabilité à 20°C (jours) | 31 |

## Revendications

1. Procédé de fabrication d'une résine urée - formol dopée à la mélamine, caractérisé par le fait qu'on ajoute de la mélamine à un mélange urée - formol de rapport F/NH₂ supérieur à 1,5, en milieu aqueux, à un pH compris entre 6 et 8 et à une température comprise entre 20 et 90°C, la quantité de mélamine étant telle que son taux dans la résine finale soit compris entre 1 et 5% en poids, puis on maintient le milieu réactionnel à une température de 80 à 103°C, à un pH de 6,5 à 7,8 pendant 5 à 15 minutes puis à un pH de 4,5 à 5,5 jusqu'à ce que l'on obtienne une résine ayant un degré de condensation recherché.

2. Procédé selon la revendication 1, caractérisé par le fait qu'on utilise un mélange de départ urée/formol au moins partiellement sous la forme d'un précondensat urée/formol.

3. Procédé selon la revendication 2, caractérisé par le fait qu'on obtient ledit précondensat en préparant un mélange urée-formol de rapport F/NH₂ compris entre 2 et 6, en milieu aqueux, en ajustant le pH à une valeur comprise entre 7 et 8,3, puis en chauffant au reflux pendant une durée pouvant aller jusqu'à 15 minutes en maintenant le pH au-dessus de 5,9 et/ou pendant une durée pouvant aller jusqu'à 30 minutes à un pH compris entre 4 et 6,5.

4. Procédé selon la revendication 3, caractérisé par le fait qu'on ajoute de l'urée au précondensat en même temps que la mélamine, afin d'obtenir le rapport F/NH₂ voulu, supérieur à 1,5.

5. Procédé selon l'une des revendications 1 à 4, caractérisé par le fait que le formol est utilisé sous la forme d'une solution aqueuse de concentration comprise entre 30 et 75% en poids.

6. Procédé selon l'une des revendications 1 à 5, caractérisé par le fait qu'on introduit dans le milieu réactionnel un sulfite alcalin, comme le métabisulfite de sodium, dans une quantité telle que son taux dans la résine finale ne dépasse pas 2% en poids.

7. Procédé selon l'une des revendications 1 à 6, caractérisé par le fait qu'on introduit du méthanol dans le milieu réactionnel dans une quantité telle que son taux dans la résine finale ne dépasse pas 5% en poids.

8. Procédé selon l'une des revendications 1 à 7, caractérisé par le fait qu'après la condensation en présence de mélamine, on ajuste le pH à une valeur de 7,2 à 7,5 en refroidissant le milieu réactionnel jusqu'à une température de 40 à 60°C, on ajoute de l'urée et le cas échéant de l'eau, pendant un laps de temps pouvant aller jusqu'à 30 minutes, le rapport F/NH₂ étant alors de 0,45 à 0,85, et, après refroidissement, on ajuste le pH à une valeur de 8,4-8,7.

9. Utilisation de la résine obtenue par le procédé tel que défini à l'une des revendications 1 à 8 comme résine aminoplaste thermodurcissable d'imprégnation.

## Patentansprüche

1. Verfahren zur Herstellung eines mit Melamin modifizierten Harnstoff-Formol-Harzes, dadurch gekennzeichnet, daß Melamin zu einem Harnstoff-Formol-Gemisch mit einem Verhältnis von F/NH₂ über 1,5 in einem wäßrigen Medium bei einem pH-Wert im Bereich von 6 bis 8 und einer Temperatur im Bereich von 20 bis 90 °C gegeben wird, wobei der Mengenanteil des Melamins so gewählt ist, daß sein Gehalt in dem am Ende vorliegenden Harz im Bereich von 1 bis 5 Gew.-% liegt, und das Reaktionsgemisch 5 bis 15 min bei einer Temperatur von 80 bis 103 °C und einem pH-Wert von 6,5 bis 7,8 und anschließend bei einem pH-Wert von 4,5 bis 5,5 gehalten wird, bis ein Harz erhalten wird, das den gewünschten Kondensationsgrad aufweist.

2. Verfahren nach Anspruch 1, daß am Anfang ein Harnstoff/Formol-Gemisch eingesetzt wird, das zumindest teilweise in Form eines Harnstoff/Formol-Vorkondensats vorliegt.

3. Verfahren nach Anspruch 2, dadurch gekennzeichnet, daß das Vorkondensat hergestellt wird, indem in einem wäßrigen Medium ein Harnstoff/Formol-Gemisch mit einem Verhältnis von F/NH₂ im Bereich von 2 bis 6 hergestellt wird, wobei der pH-Wert auf einen Wert im Bereich von 7 bis 8,3 eingestellt wird, und das Gemisch dann während einer Zeitdauer, die bis zu 15 min betragen kann, wobei der pH-Wert über 5,9 gehalten wird, und/oder während einer Zeitdauer, die bis zu 30 min betragen kann, bei einem pH-Wert im Bereich von 4 bis 6,5 auf Rückflußtemperatur erwärmt wird.

4. Verfahren nach Anspruch 3, dadurch gekennzeichnet, daß der Harnstoff gleichzeitig mit dem Melamin zu dem Vorkondensat gegeben wird, um das gewünschte Verhältnis F/NH₂ über 1,5 einzustellen.

5. Verfahren nach einem der Ansprüche 1 bis 4, dadurch gekennzeichnet, daß das Formol in Form einer wäßrigen Lösung mit einer Konzentration im Bereich von 30 bis 75 Gew.-% verwendet wird.

6. Verfahren nach einem der Ansprüche 1 bis 5, dadurch gekennzeichnet, daß in das Reaktionsmedium ein Alkalisulfit, wie beispielsweise Natriummetabisulfit, in einem solchen Mengenanteil gegeben wird, daß sein Gehalt in dem am Ende vorliegenden Harz 2 Gew.-% nicht übersteigt.

7. Verfahren nach einem der Ansprüche 1 bis 6, dadurch gekennzeichnet, daß in das Reaktionsmedium Methanol in einem solchen Mengenanteil gegeben wird, daß sein Gehalt in dem am Ende vorliegenden Harz 5 Gew.-% nicht übersteigt.

8. Verfahren nach einem der Ansprüche 1 bis 7, dadurch gekennzeichnet, daß nach der Kondensation in Gegenwart von Melamin der pH-Wert auf einen Wert im Bereich von 7,2 bis 7,5 eingestellt wird, wobei das Reaktionsmedium auf eine Temperatur von 40 bis 60 °C abgekühlt wird, Harnstoff und gegebenenfalls Wasser während einer Zeitspanne, die bis zu 30 min betragen kann, zugegeben wird, wobei das Verhältnis F/NH₂ dann 0,45 bis 0,85 beträgt, und nach dem Abkühlen der pH-Wert auf einen Wert im Bereich von 8,4 bis 8,7 eingestellt wird.

9. Verwendung des nach dem Verfahren gemäß einem der Ansprüche 1 bis 8 hergestellten Harzes als wärmehärtbares Aminoplastharz zum Imprägnieren.

## Claims

1. Process for the preparation of a melamine-doped urea-formaldehyde resin, characterized in that melamine is added to a urea-formaldehyde mixture with an F/NH₂ ratio higher than 1.5, in an aqueous medium, at a pH of between 6 and 8 and at a temperature of between 20 and 90°C, the amount of melamine being such that its proportion in the final resin is between 1 and 5% by weight, then the reaction medium is kept at a temperature of from 80 to 103°C, at a pH of from 6.5 to 7.8 for 5 to 15 minutes then at a pH of from 4.5 to 5.5 until a resin having the desired degree of condensation is obtained.

2. Process according to Claim 1, characterized in that a urea/formaldehyde starting mixture at least partially in the form of a urea/formaldehyde precondensate is used.

3. Process according to Claim 2, characterized in that the said precondensate is obtained by preparing a urea-formaldehyde mixture with an F/NH₂ ratio of between 2 and 6, in an aqueous medium, by adjusting the pH to a value of between 7 and 8.3, then by heating under reflux for a time of up to 15 minutes while keeping the pH above 5.9 and/or for a time of up to 30 minutes at a pH of between 4 and 6.5.

4. Process according to Claim 3, characterized in that urea is added to the precondensate at the same time as the melamine, in order to obtain the desired F/NH₂ ratio higher than 1.5.

5. Process according to one of Claims 1 to 4, characterized in that the formaldehyde is used in the form of an aqueous solution with a concentration of between 30 and 75% by weight.

6. Process according to one of Claims 1 to 5, characterized in that an alkali metal sulphite, such as sodium metabisulphite, is introduced into the reaction medium in an amount such that its proportion in the final resin is no more than 2% by weight.

7. Process according to one of Claims 1 to 6, characterized in that methanol is introduced into the reaction medium in an amount such that its proportion in the final resin is no more than 5% by weight.

8. Process according to one of Claims 1 to 7, characterized in that after the condensation in the presence of melamine, the pH is adjusted to a value of from 7.2 to 7.5 while cooling the reaction medium to a temperature of from 40 to 60°C, urea and optionally water are added, over a period of time of up to 30 minutes, the F/NH₂ ratio then being from 0.45 to 0.85, and after cooling the pH is adjusted to a value of 8.4-8.7.

9. Use of the resin obtained by the process as defined in one of Claims 1 to 8 as an aminoplastic thermosetting impregnation resin.
